# EUROPEAN PATENT SPECIFICATION

(11) **EP 0 565 189 B1**
(45) Date of publication and mention of the grant of the patent: **17.06.1998**
(21) Application number: 93200982.2
(22) Date of filing: 02.04.1993
(51) Int. Cl.: A01J 7/00

(54) **A construction for automatically milking animals**
Konstruktion zum automatischen Melken von Tieren
Structure de traite automatique d'animaux

(30) Priority: 06.04.1992 NL 9200639
(43) Date of publication of application: 13.10.1993
(60) Divisional application: 97203714.7
(73) Proprietor: MAASLAND N.V., 3155 PD Maasland (NL)
(72) Inventor: van der Lely, Cornelis, CH-6300 Zug (CH)
(74) Representative: Mulder, Herman

(56) References cited:
- EP-A- 0 232 568
- EP-A- 0 300 582
- EP-A- 0 302 559
- EP-A- 0 467 489
- WO-A-85/02973
- GB-A- 2 218 888

## Description

The present invention relates to an implement for automatically milking animals, such as cows, in a milking parlour, the implement comprising a milking machine having a milking robot with a robot arm construction and a number of teat cups carried by said robot arm construction, and with a detector for determining the position of the teat cups with respect to the teats of an animal, in which implement with the aid of the positional information from the detector the teat cups are adjustable into a position under the relevant teats and connectable simultaneously or about simultaneously thereto.

Such an implement is known from GB-A-2 218 888 and has the disadvantage that, although the teat cups are adjustable into a position under the relevant teats, particularly adjustable in a substantially horizontal plane, height differences between the teats are insufficiently taken into account. The purpose of the invention is to overcome this problem and to obtain a more precise adaptation of the teat cup position to the specific form of the udder of the animals.

According to the invention, the teat cups are arranged in pairs, each pair having a teat cup to be connected to a foremost teat and a teat cup to be connected to a hindmost teat and being freely pivotable about a respective substantially horizontal shaft substantially in the direction perpendicular to a respective plane defined by the axes of each pair of teat cups.

As the hindmost teats may be located at distances above the ground, different from the foremost teats, while further the teats at the left-hand side may be located at distances above the ground, different from the teats at the right-hand side of the animal, an adaptation of the teat cup position to the specific form of the udder of the animals can be obtained by a free pivotability of all the teat cups together about a substantially horizontal shaft extending in the longitudinal direction of the milking parlour when the teat cups are aligned with the teats of an animal positioned longitudinally in the milking parlour.

For a better understanding of the invention and to show how the same may be carried into effect, reference will now be made, by way of example, to the accompanying drawings, in which:
Figure 1 is a plan view of a milking parlour comprising a milking machine and a schematically shown cow present in this parlour;

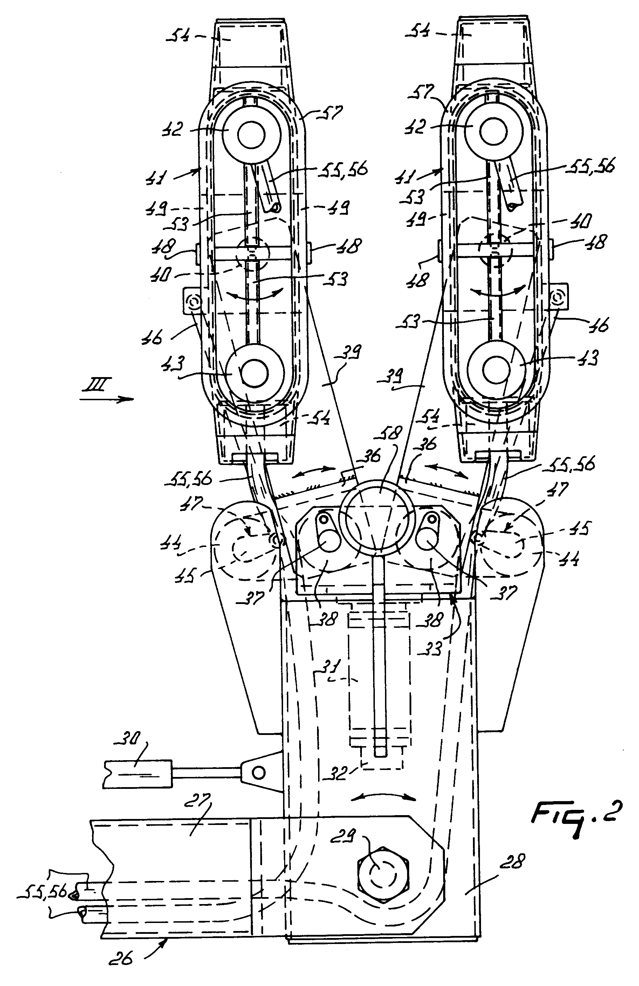

Figure 2 is a plan view of a portion of a milking robot forming part of the milking machine;
Figure 3 is a side view of that portion of the milking robot that is shown in Figure 2;
Figure 4 is a cross-sectional view taken on the line IV-IV in Figure 3;
Figure 5 is a cross-sectional view taken on the line V-V in Figure 3, and
Figures 6, 7 and 8 are diagrams with reference to which possible motions of the teat cups are explained.

Corresponding components in the drawings have been given the same reference numerals. The invention is in no way limited to the embodiment shown and described here; it only serves by way of illustration of the inventive idea.

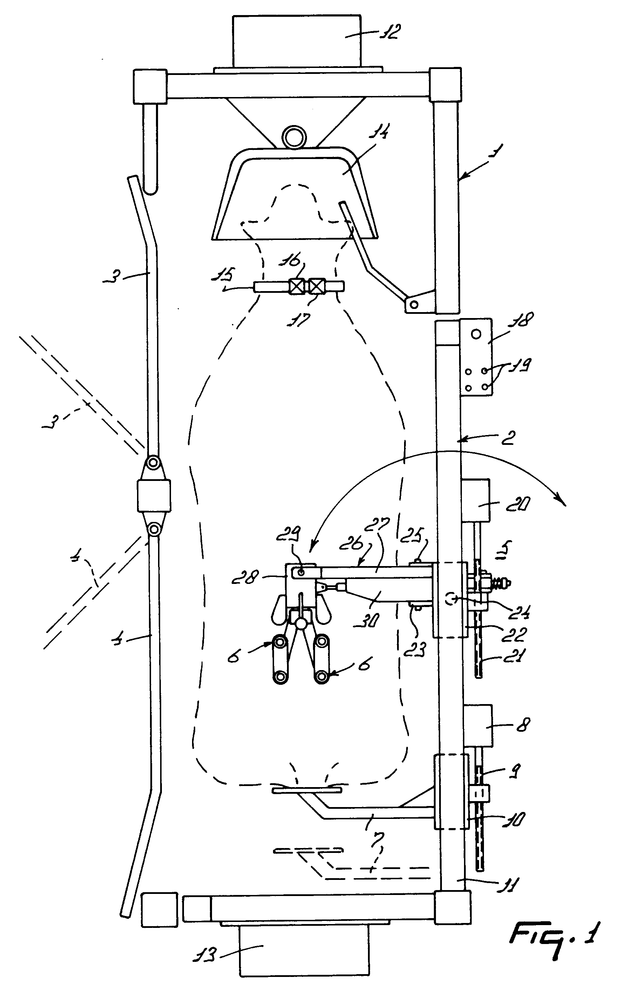

Figure 1 shows a milking parlour in which, inside a railing formed by a leading railing portion 1, a trailing railing portion 2 and railing doors 3 and 4, a milch cow is present. The milking parlour comprises a milking machine having a milking robot 5 for connecting teat cups 6 to the teats of the cow's udder. For a rough determination of a necessary starting position of the cow in the milking parlour, the milking machine co-operates with a positioning member 7. The positioning member 7 is movable with the aid of a stepper motor 8, a threaded spindle 9 connected thereto and a straight guide 10 over a horizontal carrier 11, which forms part of the trailing railing portion 2. Such a carrier 11 may alternatively be accommodated against or beside an existing railing. The milking parlour includes a computer system 12 which controls an automatic feeder. The computer system 12 of the automatic feeder is operative in dependence on a computer system 13 for the milking machine and ensures that, each time it detects, recognizes and in addition acknowledges a cow in the milking parlour 1, a quantity of fodder adapted to the animal is placed into a feeding trough 14, which feeding trough is attached to the leading railing portion 1.

The cow wears around its neck a collar 15, to which information carriers annex transmission elements 16 and 17, which form part of a cow identification system, are attached. These elements are each separately at the disposal of one of the two computer systems 12, 13, in order to safeguard the independent operation of the two computers. One information carrier annex transmission element 16 co-operates with the computer-controlled feeding system, while the other information carrier annex transmission element 17 co-operates with the computer 13 which provides for the process control of the milking robot 5. In addition, a warning panel 18 is attached to the milking parlour to indicate the presence of the milk flow coming from a teat of the cow's udder. There is a pilot light 19 for each teat, which lights up when via a sensor in a relevant teat cup 6 or in a milk line connected thereto it is detected that the milk flow has decreased to below a preset value. The warning panel 18 may alternatively be provided with two pilot lights, one pilot light emitting, for example, green light during the milking operation and the other one emitting, for example, red light when the milk flow has fallen to below a preset threshold value. In yet another embodiment the warning panel 18 may acoustically indicate stoppage of the milk flow, for example by means of a buzzer.

The milking robot 5 is disposed capably of sliding on the horizontal carrier 11 in the lengthwise direction of the milking parlour, i.e. in the direction from an imaginary line between head and tail of a cow standing in the milking parlour. With the aid of a stepper motor 20 and a threaded spindle 21 which acts on a straight guide 22, the milking robot 5 can be moved in the longitudinal direction of the milking parlour. The stepper motor 20 is then controlled from the computer 13 of the milking machine. A carrier support 23, which is pivotal about a shaft 24 which is vertically connected to the straight guide 22, is attached to the bottom side of the straight guide 22. Attached to the carrier support 23, capable of pivoting about a horizontal shaft 25, is a robot arm construction 26 which is formed by a first robot arm portion 27 and a second robot arm portion 28 which is pivotal with respect to the first robot arm portion. In the rest condition, the second robot arm portion 28 is at a right angle to the first robot arm portion 27 and is pivotal relative to this portion about a vertical shaft 29 and is controllable relative to the first robot arm portion 27 by means of an operating cylinder 30.

Arranged near the leading end of the second robot arm portion 28 there is in this robot arm portion a carrier structure 31, in which carrier structure 31 a shaft 32 which extends substantially horizontally in the longitudinal direction of the second robot arm portion 28 is rotatably disposed. A bifurcated element 33 is rigidly connected to this shaft 32. This bifurcated element 33 consists of a vertical portion 34 which is rigidly attached to the shaft 32 and a portion 35 which extends horizontally at the upper and lower end of this vertical portion 34. The bifurcated element 33 is freely rotatable in the carrier structure 31 and consequently freely rotatable with respect to the second robot arm portion 28. Two supporting elements 36 are rotatably arranged between the horizontal portions 35 of the bifurcated element 33 with the aid of predominantly vertical shafts 37. Two first motors 38 are connected to the bifurcated element 33; via the drive shaft of each of these motors 38 it is possible to obtain a pivotal motion of a supporting element 36 relative to the end of the second robot arm 28. These first motors 38 are designed as stepper motors and are furthermore provided with a gear reduction for effecting a limited and accurate pivotal motion of the supporting element. With the aid of these motors, the supporting elements 36 can consequently perform a kind of scissor-like motion with respect to the longitudinal shaft of the second robot arm portion 28, although it should be noted that the motion of one supporting element 36 is always independent of the motion of the other supporting element 36. At their lower ends, the supporting elements 36 have a forwardly and substantially horizontally extending portion 39. Near the end of this forwardly extending portion 39 of a supporting element 36 there are provided, capably of rotation about a predominantly vertical shaft 40, protection members 41 for teat cups 42 and 43. Each of the protection members 41 is pivotal about the relevant shaft 40 by means of a second motor 44 which is rigidly connected to the relevant supporting element 36, the second motor 44 also being designed as a stepper motor having a reduction gear. With the aid of the second motor 44, and also by a lever construction 47 which is formed by an arm 45 and a control rod 46 and whose end is connected freely rotatably to a relevant protection member 41, the protection member 41 can be pivoted about the shaft 40. Using the said first and second motors 38 and 44, it is consequently possible to obtain on the one hand a pivotal motion of a supporting element 36 about the shaft 37 and on the other hand a pivotal motion of a protection member 41 about a shaft 40. These two pivotal motions in combination result on the one hand in the possibility of moving the protection member 41 in a lateral direction relative to the longitudinal shaft of the second robot arm portion 28, and on the other hand in a possibility of setting relative to each other the mutual spacing between the respective teat cups 42 and 43 in the two protection members. In addition, each of the protection members 41 is disposed freely pivotably about aligned shaft portions or pins 48 between two upwardly extending supports 49. These upwardly extending supports 49 are interconnected near their bottom ends, the intermediate section interconnecting the supports 49 being pivotal about the shaft 40. The protection members 41 realize a protection provided around the circumference of a teat cup. The protection member protects the teat cups and promotes the continuous connection of the teat cups to the teats. In the present embodiment, this protection member extends through the overall circumference around two teat cups. The protection member is in the shape of a box. Towards the box-like protection members 41 there are provided at some distance from the bottom two strips 50 which extend in the longitudinal direction of the protection member. Carriers 51 are movable along these strips 50 in the longitudinal direction of the protection members 41. Respective teat cups 42 and 43 are disposed on each carrier 51 with the aid of a pressure spring 52. Because of the arrangement with the aid of a pressure spring 52, the teat cups 42 and 43 can freely perform any possible tilting motions on the relevant carrier 51. The carriers 51 in a protection member 41 can be moved independently of each other in the longitudinal direction of the protection member by means of a motor-driven threaded spindle 53. To that end, two third motors 54 are connected to each protection member 41. Also these third motors 54 are all designed as stepper motors. By means of the four motors 54 thus present, the teat cups 42 and 43 can be moved independently of each other in the longitudinal direction of a protection member 41. The milk and pulsation pipelines 55 and 56, respectively, leading from the teat cups 42 and 43 inside the protection member 41, are for that purpose passed via apertures made in the second robot arm portion 28 through this second robot arm portion and thereafter through the first robot arm portion 27.

The upper side of each of the protection members 41 is provided with a protective rim 57, which is made of a resilient material. In spite of the fact that the teat cups 42 and 43 extend to above the protection members 41, this rim 57 nevertheless has a protective function.

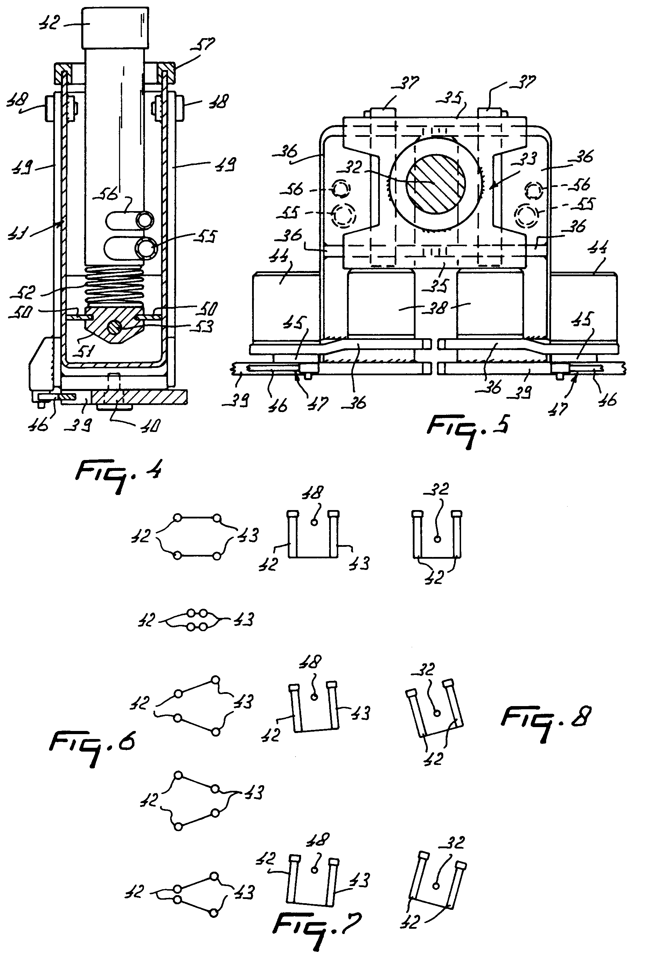

Figures 6, 7 and 8 show a number of diagrams which illustrate the various motions of the teat cups 42 and 43. Figure 6 schematically shows the relative position of the teat cups 42 and 43 in a predominantly horizontal plane. It is illustrated how, starting from a reference position as indicated in the upper diagram in Figure 6, by a lateral motion of the protection members by means of the first and second motors 38 and 44 and by moving the teat cups 42 and 43 up to each other with the aid of the third motors 43, the situations shown in the remaining diagrams of Figure 6 can be obtained, wherein by a pivotal motion about the shaft 40 by means of the third motors 54, if necessary combined with a lateral motion, a position of the individual teat cups is obtained, in which the spacing between the teat cups 42 and the spacing between the teat cups 43 differ. The aforesaid eight motors, i.e. the two first motors 38, the two second motors 44 and the four thirs motors 54 provide that the teat cups can assume any possible positions necessary for connection of the cups to the teats of an animal to be milked. Figure 7 shows a number of diagrams which illustrate the free pivotability of a protection member 41 about the shaft members 48. Figure 8 shows diagrams which illustrate the free pivotability of the supporting elements 36 in conjunction with the protection members 41 about the shaft 32. Because of the fact that the teat cups 42 and 43 can pivot freely relative to the shafts 32 and 48, an optimal adaptation of the position of the teat cups to the specific shape of the udder of a cow can be obtained.

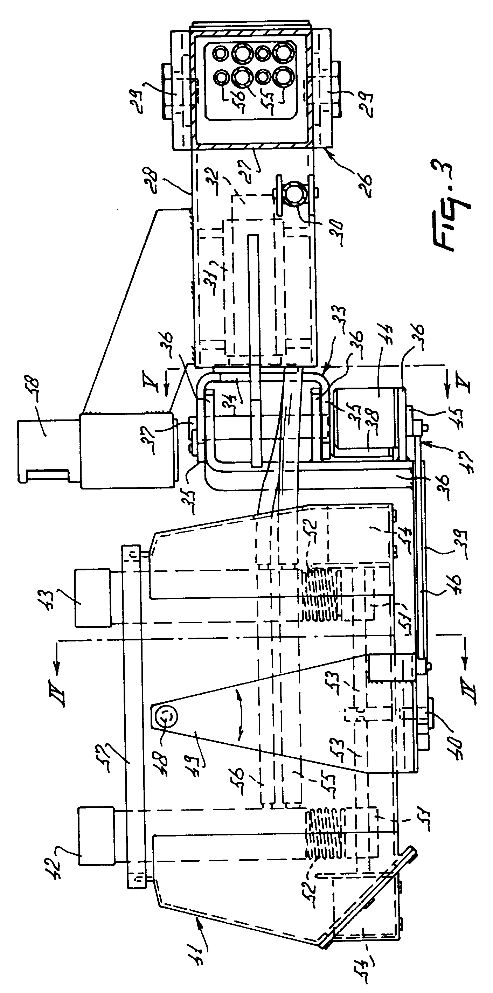

Figure 3 furthermore shows a detector, more specifically a laser detector 58, which is rigidly fastened on the second robot arm portion 28. When, on the basis of either cow identification data or on the basis of data provided by mechanical positioning means, the robot arm has been roughly positioned under the udder of a cow, the position of the teats is determined with the aid of the detector 58, whereafter the positional information supplied by the detector 58 is applied to the computer system 13, with the aid of which the control signals for the motors 38, 44 and 54 are obtained. After the position of the individual teat cups 42 and 43 is readjusted such in an approximately horizontal plane that each teat cup is approximately under a relevant teat, the robot arm construction 26 can be moved upwards. Put differently, the teat cups can be connected substantially simultaneously, whilst because of the fact that the cups can freely tilt about the shafts 32 and 48 an adaptation to the teats of the animal is obtained. This adaptation is still further increased by the manner in which the teat cups 42 and 43 are accommodated in the holder 41 by means of pressure springs 52.

## Claims

1. An implement for automatically milking animals, such as cows, in a milking parlour, the implement comprising a milking machine having a milking robot (5) with a robot arm construction (26) and a number of teat cups (6; 42, 43) carried by said robot arm construction (26), and with a detector (58) for determining the position of the teat cups (42, 43) with respect to the teats of an animal, in which implement with the aid of the positional information from the detector (58) the teat cups (42, 43) are adjustable into a position under the relevant teats and connectable simultaneously or about simultaneously thereto, characterized in that the teat cups (42, 43) are arranged in pairs, each pair having a teat cup (43) to be connected to a foremost teat and a teat cup (42) to be connected to a hindmost teat and being freely pivotable about a respective substantially horizontal shaft (48) substantially in the direction perpendicular to a respective plane defined by the axes of each pair of teat cups.

2. An implement as claimed in claim 1, characterized in that the teat cups (42, 43) are together freely pivotable about a shaft (32) extending substantially in the longitudinal direction of the milking parlour when the teat cups are aligned with the teats of an animal positioned longitudinally in the milking parlour.

3. An implement as claimed in claim 1 or 2, characterized in that each pair of teat cups (42, 43) is pivotably connected to a supporting element (36) which is pivotal relative to an end portion (28) of the robot arm about a shaft (32) extending substantially in the longitudinal direction of the milking parlour when the teat cups are aligned with the teats of an animal positioned longitudinally in the milking parlour.

4. An implement as claimed in claim 3, characterized in that first motors (38) are present for moving the supporting elements (36) relative to the end of the robot arm (28) about upwardly directed shafts (37).

5. An implement as claimed in claim 3 or 4, characterized in that second motors (44) are present for moving the pairs of teat cups (42, 43) relative to the supporting elements (36).

6. An implement as claimed in claim 4 or 5, characterized in that the motors (38, 44) are stepper motors having a gear reduction.

7. An implement as claimed in any one of the claims 3 - 6, characterized in that the pairs of teat cups (42, 43) are movable independently of each other.

8. An implement as claimed in any one of the claims 3 - 7, characterized in that third motors (54) are present for moving the individual teat cups (42, 43) substantially in said longitudinal direction.

9. An implement as claimed in claim 8, characterized in that the third motors (54) are stepper motors which co-operate with an associated threaded spindle (53), with the aid of which a teat cup (42, 43) can be moved in said longitudinal direction.

10. An implement as claimed in claim 2 or 3, characterized in that a teat cup (42, 43) is movable in said longitudinal direction and in the horizontal direction perpendicular thereto, as well as in the upward direction.

11. An implement as claimed in any one of the preceding claims, characterized in that a teat cup (42, 43) is freely pivotable about two imaginary axes located at the bottom side of the teat cup.

12. An implement as claimed in claim 11, characterized in that a teat cup is mounted resiliently.

## Patentansprüche

1. Vorrichtung zum automatischen Melken von Tieren, wie z. B. Kühen, in einem Melkstand, mit einer Melkmaschine und einem Melkroboter (5), der eine Roboterarm-Konstruktion (26) und mehrere von ihr getragene Zitzenbecher (6; 42, 43) sowie einen Detektor (58) aufweist, um die Position der Zitzenbecher (42, 43) relativ zu den Zitzen eines Tieres zu bestimmen, wobei die Zitzenbecher (42, 43) mit Hilfe der von dem Detektor (58) gelieferten Positionsinformationen in eine Position unterhalb der jeweiligen Zitzen einzustellen und gleichzeitig oder annähernd gleichzeitig an sie anzuschließen sind,
dadurch gekennzeichnet, daß die Zitzenbecher (42, 43) paarweise angeordnet sind, wobei jedes Paar einen an eine vordere Zitze anzuschließenden Zitzenbecher (43) und einen an eine hintere Zitze anzuschließenden Zitzenbecher (42) aufweist und um eine entsprechende, im wesentlichen horizontale Achse (48) in einer Richtung frei schwenkbar ist, die im wesentlichen senkrecht zu einer entsprechenden Ebene verläuft, die durch die Achsen jedes Zitzenbecher-Paares definiert ist.

2. Vorrichtung nach Anspruch 1,
dadurch gekennzeichnet, daß die Zitzenbecher (42, 43) gemeinsam um eine Achse (32) frei schwenkbar sind, die sich im wesentlichen in Längsrichtung des Melkstandes erstreckt, wenn die Zitzenbecher zu den Zitzen eines Tieres ausgerichtet sind, das in dem Melkstand in Längsrichtung positioniert ist.

3. Vorrichtung nach Anspruch 1 oder 2,
dadurch gekennzeichnet, daß jedes Paar von Zitzenbechern (42, 43) mit einem Stützelement (36) schwenkbar verbunden ist, das relativ zu einem Endteil (28) des Roboterarmes um eine Achse (32) schwenkbar ist, die sich im wesentlichen in Längsrichtung des Melkstandes erstreckt, wenn die Zitzenbecher zu den Zitzen eines Tieres ausgerichtet sind, das in dem Melkstand in Längsrichtung positioniert ist.

4. Vorrichtung nach Anspruch 3,
dadurch gekennzeichnet, daß erste Motoren (38) vorgesehen sind, um die Stützelemente (36) relativ zu dem Ende des Roboterarmes (28) um aufwärts gerichtete Achsen (37) zu bewegen.

5. Vorrichtung nach Anspruch 3 oder 4,
dadurch gekennzeichnet, daß zweite Motoren (44) vorgesehen sind, um die Paare von Zitzenbechern (42, 43) relativ zu den Stützelementen (36) zu bewegen.

6. Vorrichtung nach Anspruch 4 oder 5,
dadurch gekennzeichnet, daß die Motoren (38, 44) Schrittmotoren mit Untersetzungsgetriebe sind.

7. Vorrichtung nach einem der Ansprüche 3 bis 6,
dadurch gekennzeichnet, daß die Paare von Zitzenbechern (42, 43) unabhängig voneinander zu bewegen sind.

8. Vorrichtung nach einem der Ansprüche 3 bis 7,
dadurch gekennzeichnet, daß dritte Motoren (54) vorgesehen sind, um die einzelnen Zitzenbecher (42, 43) im wesentlichen in Längsrichtung zu bewegen.

9. Vorrichtung nach Anspruch 8,
dadurch gekennzeichnet, daß die dritten Motoren (54) Schrittmotoren sind, die mit einer zugehörigen Gewindespindel (53) zusammenwirken, mittels der ein Zitzenbecher (42, 43) in Längsrichtung zu bewegen ist.

10. Vorrichtung nach Anspruch 2 oder 3,
dadurch gekennzeichnet, daß ein Zitzenbecher (42, 43) in Längsrichtung und senkrecht hierzu in horizontaler Richtung sowie in Richtung nach oben zu bewegen ist.

11. Vorrichtung nach einem der vorhergehenden Ansprüche,
dadurch gekennzeichnet, daß ein Zitzenbecher (42, 43) um zwei an der Unterseite des Zitzenbechers befindliche gedachte Achsen frei schwenkbar ist.

12. Vorrichtung nach Anspruch 11,
dadurch gekennzeichnet, daß ein Zitzenbecher elastisch montiert ist.

## Revendications

1. Structure de traite automatique d'animaux, tels que des vaches, dans une stalle de traite, la structure comprenant une machine à traire ayant un robot trayeur (5) avec une structure de bras de robot (26) et un certain nombre de godets de trayons (6; 42, 43) portés par ladite structure de bras de robot (26) et avec un détecteur (58) pour déterminer la position des godets de trayons (42, 43) par rapport aux trayons d'un animal, dans laquelle structure, à l'aide de l'information de position venant du détecteur (58), les godets de trayons (42, 43) sont réglables vers uns position sous les trayons correspondants auxquels ils peuvent être reliés simultanément ou à peu près simultanément,
**caractérisée** en ce que les godets de trayons (42, 43) sont disposés en paires, chaque paire ayant un godet de trayon (43) à relier à un trayon antérieur et un godet de trayon (42) à relier à un trayon postérieur et étant pivotants librement autour d'un axe respectif (48) sensiblement horizontal, substantiellement dans le sens perpendiculaire à un plan respectif défini par les axes de chaque paire de godets de trayons.

2. Structure selon la revendication 1, caractérisée en ce que les godets de trayons (42, 43) sont, ensemble, pivotants librement autour d'un axe (32) s'étendant substantiellement dans le sens longitudinal de la stalle de traite quand les godets de trayons sont alignés avec les trayons d'un animal positionné longitudinalement dans la stalle de traite.

3. Structure selon la revendication 1 ou 2, caractérisée en ce que chaque paire de godets de trayons (42, 43) est reliée de manière pivotante à un élément de support (36) qui est pivotant par rapport à une partie terminale (28) du bras de robot autour d'un axe (32) s'étendant substantiellement dans le sens longitudinal de la stalle de traite quand les godets de trayons sont alignés avec les trayons d'un animal positionné longitudinalement dans la stalle de traite.

4. Structure selon la revendication 3, caractérisée en ce que des premiers moteurs (38) sont présents pour entraîner les éléments de support (36) par rapport à l'extrémité (28) du bras de robot autour d'arbres (37) dirigés vers le haut.

5. Structure selon la revendication 3 ou 4, caractérisée en ce que des deuxièmes moteurs (44) sont présents pour entraîner les paires de godets de trayons (42, 43) par rapport aux éléments de support (36).

6. Structure selon la revendication 4 ou 5, caractérisée en ce que les moteurs (38, 44) sont des moteurs pas-à-pas ayant un réducteur.

7. Structure selon l'une quelconque des revendications 3 à 6, caractérisée en ce que les paires de godets de trayons (42, 43) sont mobiles indépendamment l'une de l'autre.

8. Structure selon l'une quelconque des revendications 3 à 7, caractérisée en ce que des troisièmes moteurs (54) sont présents pour entrainer les godets de trayons (42, 42) individuels, substantiellement dans ledit sens longitudinal.

9. Structure selon la revendication 8, caractérisée en ce que les troisièmes moteurs (54) sont des moteurs pas-à--pas qui coopèrent avec une vis-mère (53) associée, à l'aide de laquelle un godet de trayon (42, 43) peut être entraîné dans ledit sens longitudinal.

10. Structure selon la revendication 2 ou 3, caractérisée en ce qu'un godet de trayon (42, 43) est mobile dans ledit sens longitudinal et dans le sens horizontal perpendiculaire à celui-ci, ainsi que dans le sens vers le haut.

11. Structure selon l'une quelconque des revendications précédentes, caractérisée en ce qu'un godet de trayon (42, 43) est pivotant librement autour de deux axes imaginaires situés au côté inférieur du godet de trayon.

12. Structure selon la revendication 11, caractérisée en ce qu'un godet de trayon est monté élastiquement.
